Europäisches Patentamt

European Patent Office

Office européen des brevets

(19)

(11) Numéro de publication : **0 045 687**

**B1**

(12)

# FASCICULE DE BREVET EUROPÉEN

(45) Date de publication du fascicule du brevet : **13.06.84**

(51) Int. Cl.³ : **A 61 D 7/00**, A 01 K 13/00

(21) Numéro de dépôt : **81401215.9**

(22) Date de dépôt : **29.07.81**

(54) Dispositif pour l'administration par voie orale d'un liquide de traitement à des animaux.

(30) Priorité : **31.07.80 FR 8017143**

(43) Date de publication de la demande :
**10.02.82 Bulletin 82/06**

(45) Mention de la délivrance du brevet :
**13.06.84 Bulletin 84/24**

(84) Etats contractants désignés :
**AT BE CH DE FR GB IT LI LU NL SE**

(56) Documents cités :
**DE-C- 246 041**
**DE-C- 372 798**
**DE-C- 662 740**
**FR-A- 2 434 613**
**US-A- 2 609 819**
**US-A- 2 764 982**
**US-A- 4 050 460**

(73) Titulaire : **Begouen, Jean-Paul**
**Lombost Archignat**
**F-03380 Huriel (FR)**

(72) Inventeur : **Begouen, Jean-Paul**
**Lombost Archignat**
**F-03380 Huriel (FR)**

(74) Mandataire : **Chanet, Jacques**
**B.P. 27 95bis avenue de Royat**
**F-63400 Chamalières (FR)**

Jouve, 18, rue St-Denis, 75001 Paris, France

## Description

La présente invention a pour objet un dispositif destiné à administrer par voie orale aux animaux des médicaments liquides ou autres solutions de traitement.

On connaît par une demande de brevet antérieure FR-A-2 434 613 du même Demandeur, un dispositif destiné aux fins susvisées, ledit dispositif étant du genre comportant un tubulure en forme de boucle destinée à enserrer la mâchoire supérieure et le nez de l'animal et à acheminer le liquide depuis un récipient jusqu'à la gorge de l'animal, la partie inférieure de ladite boucle étant percée à cet effet d'un orifice ; dans ce dispositif le liquide s'écoule par gravité, et un guide-jet ainsi que des moyens de contention de la tête de l'animal, tels que pièce d'appui coudée et réservoir en forme de manche, sont prévus. On connaît aussi par un brevet allemand 246 041 (LAPPAT) un organe en forme d'ajutage équipant un appareil du type précité et destiné à orienter le jet de liquide en direction du fond de la gorge et à éviter que l'animal arrête l'écoulement du liquide avec sa langue. On connaît aussi de US-A-4050460 un dispositif destiné au même usage comportant un réservoir souple pliable.

Les dispositifs précités sont soit de réalisation assez compliquée, soit mal adaptés aux jeunes ruminants, veaux par exemple.

La présente invention a pour but de proposer un dispositif de fabrication simple et coût modique particulièrement adapté à l'administration de liquides aux jeunes ruminants.

Selon la présente invention, un dispositif du type précité comporte un réservoir fermé formé d'un flacon cylindrique ou parallélépipèdique, constitué d'une matière assez souple et élastique du genre matière plastique, permettant de légères compressions manuelles, une boucle tubulaire d'écoulement ayant une forme trapézoïdale dont la petite base, qui, en position d'utilisation est la base supérieure, comporte l'entrée du conduit d'écoulement interne à la boucle et un ajutage constitué par un tube souple et aplati, en caoutchouc par exemple, ledit ajutage étant placé au milieu de la grande base de la boucle qui comporte l'orifice de sortie du conduit d'écoulement. Il résulte des caractéristiques précitées, en premier lieu que l'écoulement du liquide peut résulter de légères pressions manuelles appliquées au réservoir, que la forme trapézoïdale conduit à un pincement du nez de l'animal tout à fait propice à l'ingestion de liquide, que l'ajutage en matière souple a pour résultat un titillement du palais et de la partie arrière de la langue amenant l'ouverture d'un canal particulier du tube digestif des ruminants dit gouttière œsophagienne.

De préférence un plan médian dudit flacon forme avec le demi-plan contenant ladite boucle trapézoïdale un angle d'environ 160°, tandis qu'un plan médian dudit ajutage forme avec le demi-plan contenant la boucle un angle d'environ 120°.

Suivant une autre forme de réalisation destinée à permettre une manipulation plus aisée et un dosage plus précis, un dispositif de l'invention comporte en outre un levier coudé dont une extrémité est articulée sur ledit flacon au voisinage de l'une des extrémités de ce dernier, ledit levier étant disposé sensiblement le long de la paroi du flacon, le coude du levier étant situé sensiblement vers le milieu de la paroi tandis que l'extrémité libre du levier est voisine de l'autre extrémité du flacon, ledit coude étant destiné à déformer de façon élastique la paroi du flacon pour permettre l'injection de la solution.

De préférence l'articulation du levier sur le flacon est réalisé par l'intermédiaire d'un collier enserrant ledit flacon, le levier étant articulé sur le collier.

De préférence enfin un manchon en matière souple est disposé autour dudit levier et peut être déplacé le long de celui-ci d'un côté à l'autre du coude, en vue d'augmenter la déformation du flacon.

La présente invention sera mieux comprise et des détails apparaîtront dans la description qui va être faite des deux modes préférés de réalisation en relation avec les figures des planches annexées dans lesquelles :

La figure 1 est une élévation d'un dispositif de l'invention,

La figure 2 est une représentation en coupe du dispositif de la figure précédente,

La figure 3 est une illustration de la façon dont on peut se servir du dispositif des figures précédentes, et

La figure 4 est une élévation d'un dispositif de l'invention selon une variante.

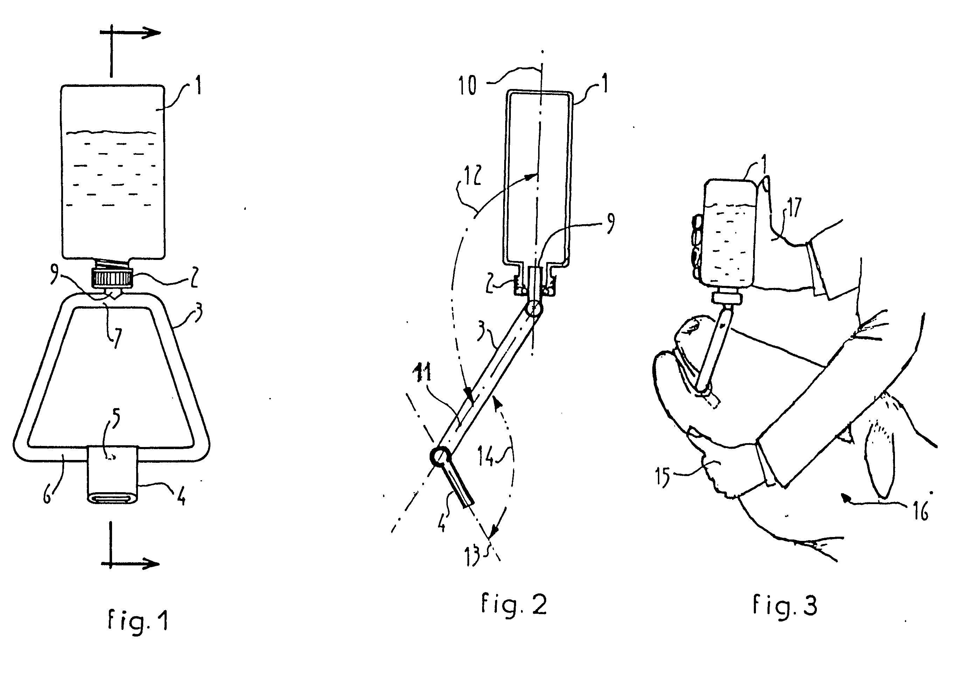

Sur les fig. 1 et 2 un dispositif conforme à l'invention, ci-après dénommé « buvette » se compose d'un réservoir fermé ou flacon parallélépipèdique 1 dont la paroi est déformable élastiquement, d'un bouchon 2 vissable sur le col du récipient, d'une boucle trapézoïdale 3 formée d'un tube et d'un ajutage tubulaire 4 de forme aplatie communiquant avec l'espace intérieur de la boucle par un orifice 5 percé sensiblement au milieu de la grande base 6 de cette dernière. La petite base 7 comporte une tubulure rigide 9 passant à travers le bouchon 2 et est rendue solidaire de celui-ci par collage, soudage ou par tout autre moyen. On notera que l'espace intérieur de la bouche est continu tout au long de celle-ci.

Sur la fig. 2 plus particulièrement on remarque que l'angle 12 que forme le plan médian 10 du récipient avec le demi-plan 11 contenant la boucle est d'environ 160°, tandis que le plan 13 de l'ajutage forme avec le demi-plan 11 un angle 14 d'environ 120° ; le choix de ces angles répond à l'utilisation du dispositif telle qu'elle va être maintenant décrite.

Tandis qu'une main 15 saisit l'animal 16 au-dessous de la mâchoire inférieure et lui relève la tête, l'autre main 17 introduit la boucle de la buvette dans la gueule de l'animal jusqu'à ce que sa base atteigne la commissure des lèvres de celui-ci ; à ce stade les doigts de la main 17 peuvent faire pression sur le flacon 1 pour faire s'écouler le liquide. Le flacon pourra être légèrement translucide et gradué.

On notera aussi qu'il est possible avec un tel appareil d'obtenir l'écoulement du liquide par gravité en perçant un trou soit dans le réservoir au voisinage du bouchon, soit dans la boucle tubulaire au voisinage du bouchon, la position du trou étant telle qu'elle permet son obturation à l'aide d'un doigt lorsque l'appareil est appliqué à l'animal traité ; on joue alors sur l'entrée d'air par le trou pour commander l'écoulement par gravité ; accessoirement le trou pourra être prolongé à l'intérieur de l'appareil par un petit tuyau conduisant l'air entré vers la partie supérieure du réservoir.

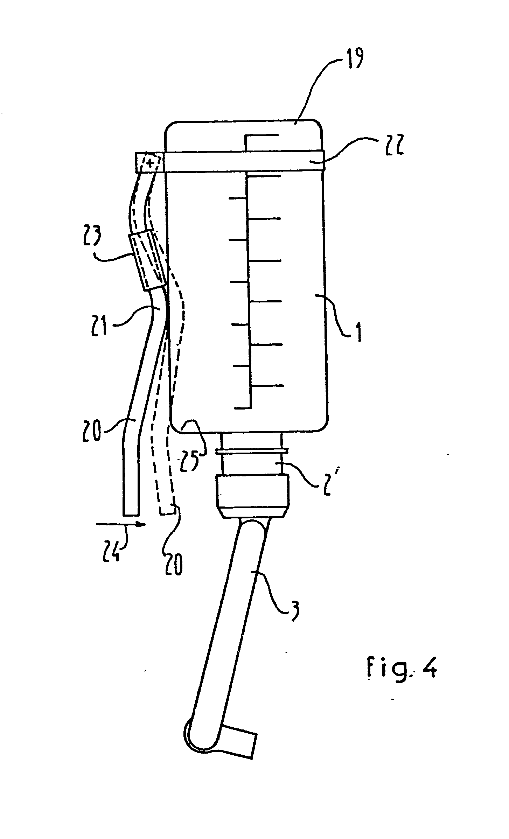

Sur la fig. 4, un flacon 1 analogue à celui des figures précédentes comporte notamment un goulot 2' sur lequel est fixé une boucle tubulaire trapézoïdale 3 ; il est de préférence cylindrique plutôt que parallélépipèdique. Il comporte au voisinage de son extrémité 19 opposée au goulot un collier 22 sur lequel est articulé un levier coudé 20 disposé sensiblement le long de sa paroi et s'étendant jusqu'au niveau de l'extrémité du goulot 2'.

Le levier 20 est coudé dans sa partie médiane en 21, laquelle partie médiane est sensiblement disposée vers le milieu de la paroi du flacon.

La position du levier représenté en pointillés 20' résulte d'une impulsion (flèche 24) exercée sur le levier, le rapprochant du goulot. Dans cette dernière position, le coude 21 du levier a déformé la paroi du flacon et à diminué le volume intérieur de ce dernier. On remarque que la course du levier est limitée par le bord rigide 25 du flacon ; de ce fait, et à condition que l'effort musculaire exercé par un ou deux doigts par exemple sur l'extrémité du levier reste dans des limites raisonnables, la variation de volume intérieur du flacon est constante et il en est de même de la quantité de liquide éjecté à chaque impulsion.

On remarque en outre sur la fig. 4 la présence d'un manchon 23 en matière souple disposé au voisinage du coude du levier et pouvant glisser le long de celui-ci pour notamment recouvrir le coude ; dans cette dernière position la déformation de la paroi du flacon se trouve augmentée de l'épaisseur du manchon ; la variation de volume intérieur est elle aussi augmentée mais elle reste néanmoins constante d'une impulsion à l'autre. Ainsi, par exemple, une impulsion en l'absence du manchon sur le coude provoquera l'écoulement de 30 cm³ tandis qu'en présence du manchon, la quantité écoulée sera de 50 cm³.

On remarque aussi que cette seconde variante de réalisation offre une excellente prise du dispositif pour sa manipulation, le goulot 2' étant tenu entre le pouce et la paume d'une main tandis que l'index par exemple fait pression sur l'extrémité du levier, l'autre main relevant la tête de l'animal.

## Revendications

1. Dispositif destiné à administrer à des animaux des substances liquides, ledit dispositif comportant une tubulure d'écoulement en forme de boucle (3) ayant une entrée (9) et une sortie (5) et destinée à enserrer la mâchoire supérieure et le nez de l'animal, tout en servant de conduit aux substances liquides, ledit dispositif comportant aussi un ajutage (4) fixé à la sortie (5) de la tubulure et destiné à orienter le jet de liquide en direction du fond de la gorge de l'animal, et un réservoir (1) fermé fixé à l'entrée (9) de la tubulure et destiné à contenir lesdites substances, caractérisé en ce que l'ajutage (4) est souple, en ce que le réservoir (1) a la forme d'un flacon pourvu d'un col et est constitué d'une matière souple et élastique, et en ce que la boucle (3) tubulaire a une forme trapézoïdale, la petite base du trapèze comportant l'entrée (9) de la tubulure et la grande base sa sortie (5), la boucle ayant un espace intérieur continu, d'où il résulte simultanément que la solution peut être injectée dans la gorge de l'animal par compression manuelle du réservoir (1) tandis que le dispositif est maintenu fermement dans la bouche de l'animal grâce à la boucle qui lui enserre le nez , du fait de sa forme trapézoïdale.

2. Dispositif selon la revendication 1, caractérisé en ce que ladite boucle tubulaire (3) est solidaire d'un bouchon (2) vissable sur le col dudit flacon (1).

3. Dispositif selon la revendication 2, caractérisé en ce que ledit flacon, constitué d'une matière translucide, est gradué.

4. Dispositif selon l'une des revendications 1, 2 et 3, caractérisé en ce qu'un plan médian (10) dudit flacon forme avec le demi-plan (11) contenant ladite boucle trapézoïdale un angle d'environ 160°, et en ce qu'un plan médian (13) dudit ajutage forme avec le demi-plan (11) contenant ladite boucle trapézoïdale un angle d'environ 120°.

5. Dispositif selon la revendication 1, caractérisé en ce qu'il comporte en outre un levier (20) coudé dont une extrémité est articulé sur ledit flacon (1) au voisinage de l'une des extrémités (19) de ce dernier, ledit levier étant disposé sensiblement le long de la paroi du flacon, le coude (21) du levier étant situé sensiblement vers le milieu de la paroi tandis que l'extrémité libre du levier est voisine de l'autre extrémité du flacon, ledit coude étant destiné à déformer la paroi du flacon par compression pour permettre l'injection de la solution.

6. Dispositif selon la revendication 5, caractérisé en ce que l'articulation du levier (20) sur le flacon (1) est réalisée par l'intermédiaire d'un collier (22) enserrant ledit flacon, le levier (20) étant articulé sur le collier.

7. Dispositif selon la revendication 5, caractérisé par un manchon (23) en matière souple disposé autour dudit levier, et pouvant être déplacé le long de celui-ci d'un côté à l'autre du coude, en vue d'augmenter la déformation du flacon.

## Claims

1. A device for administering liquids to animals, the said device comprising a loop-shaped flow pipe having an inlet (9) and an outlet (5) and adapted to enclose the animal's top jaw and nose while acting as a duct for the liquids, the said device also having a nozzle (4) secured to the flow pipe outlet (5) and adapted to guide the jet of liquid towards the back of the animal's throat, an a closed reservoir (1) secured to the flow pipe inlet (9) and adapted to contain said liquids, characterised in that the nozzle (4) is flexible , the reservoir (1) is in the form of a bottle provided with a neck and consists of a flexible and elastic material, and the tubular loop (3) is of trapezoidal shape, the minor base of the trapezium containing the flow pipe inlet (9) and the major base its outlet (5), the loop having a continuous internal space so that, simultaneously, the solution can be injected into the animal's throat by manual compression of the reservoir (1) while the device is firmly held in the animal's mouth by means of the loop enclosing its nose, as a result of its trapezoidal shape.

2. A device according to claim 1, characterised in that the said tubular loop (3) is connected to a plug (2) which is adapted to be screwed on the neck of the said bottle (1).

3. A device according to claim 2, characterised in that the said bottle, which consists of a transluscent material, is graduated.

4. A device according to any one of claims 1, 2 and 3, characterised in that a central plane (10) of the said bottle is at an angle of about 160° to the half-plane (11) containing the said trapezoidal loop and a central plane (13) of said nozzle is at an angle of about 120° to the half-plane (11) containing the said trapezoidal loop.

5. A device according to claim 1, characterised in that is also comprises a bent lever (20) one end of which is articulated on said bottle (1) near one of the ends (19) of the latter, the said lever being disposed substantially along the bottle wall, the lever bend (21) being situated substantially at the middle of the wall while the free end of the lever is adajcent the other end of the bottle, the said bend being adapted to deform the bottle wall by compression to allow injection of the solution.

6. A device according to claim 5, characterised in that the articulation of the lever (20) on the bottle (1) is provided by means of a collar (22) surrounding. said bottle, the lever (29) being articulated on the collar.

7. A device according to claim 5, characterised by a sleeve (23) of flexible material disposed around said lever and adapted to be moved along the latter from one side of the bend to the other in order to increase the bottle deformation.

## Ansprüche

1. Vorrichtung zum Verabreichen von flüssigen Substanzen an Tiere, mit einer schleifenförmigen Röhre (3), die einen Einlaß (9) und einen Auslaß (5) aufweist, und die dazu bestimmt ist, den oberen Kinnbacken und die Nase des Tieres zusammenzupressen und dabei als Leitung für die flüssigen Substanzen zu dienen, wobei die Vorrichtung einen am Auslaß (5) der Röhre befestigten Ansatzstutzen (4) aufweist, der dazu dient, den Flüssigkeitsstrahl gegen den Grund der Kehle des Tieres zu richten, ferner mit einem geschlossenen Vorratsbehälter (1), der am Einlaß (9) der Röhre befestigt ist und dazu dient, die genannten Substanzen aufzunehmen, dadurch gekennzeichnet, daß der Ansatzstutzen (4) weich ist, daß der Vorratsbehälter (1) die Gestalt einer Halsflasche hat und aus weichem und elastischem Werkstoff besteht, und daß die schleifenförmige Röhre (3) eine trapezförmige Gestalt hat, deren kleine Basis den Einlaß (9) der Röhre, und deren große Basis den Auslaß (5) umfaßt und einen kontinuierlichen Innenraum hat, woraus gleichzeitig folgt, daß die Lösung in die Kehle des Tieres durch manuelles Zusammendrücken des Vorratsbehälters (1) hineingespritzt wird, während die Vorrichtung aufgrund der Schleife die die Nase zufolge der Trapezgestalt zusammenpreßt, sicher im Maul des Tieres gehalten wird.

2. Vorrichtung nach Anspruch 1, dadurch gekennzeichnet, daß die schleifenförmige Röhre (3) als Bestandteil einen auf den Hals der Flasche (1) aufschraubbaren Stopfen (2) hat.

3. Vorrichtung nach Anspruch 2, dadurch gekennzeichnet, daß die Flasche, die aus durchsichtigem Werkstoff besteht, mit einer Gradeinteilung versehen ist.

4. Vorrichtung nach einem der Ansprüche 1 bis 3, dadurch gekennzeichnet, daß eine Mittelebene (10) der Flasche mit einer Halbebene (11), die die genannte trapezförmige Schleife umfaßt, einen Winkel von etwa 160° einschließt, und daß eine Mittelebene (13) des genannten Einfüllstutzens mit der Halbebene (11), die die genannte trapezförmige Schleife umfaßt, einen Winkel von etwa 120° einschließt.

5. Vorrichtung nach Anspruch 1, dadurch gekennzeichnet, daß diese u. a. einen gekröpften Hebel (20) aufweist, dessen eines Ende an der Flasche (1) im Bereich einer (19) ihrer Enden angelenkt ist, daß der Hebel im wesentlichen entlang der Wand der Flasche angeordnet ist, daß sich die Krümmung (21) des Hebels im wesentlichen im mittleren Bereich der Wand befindet, während sich das freie Ende des hebels im Bereich des anderen Endes der Flasche befindet, und daß die Krümmung dazu dient, die Wand der Flasche durch Druck zu verformen, um das Einspritzen der Flüssigkeit zu bewirken.

6. Vorrichtung nach Anspruch 5, dadurch gekennzeichnet, daß das Anlenken des Hebels (20) an der Flasche mittels eines Bundes (22) vorgenommen ist, der die Flasche zusammenpreßt, und daß der Hebel (20) am Bund angelenkt ist.

7. Vorrichtung nach Anspruch 5, dadurch gekennzeichnet, daß eine Manschette (23) aus weichem Werkstoff den Hebel umgibt und im Hinblick auf die Verformung der Flasche von der einen Seite der Krümmung auf die andere verschoben werden kann.

Fig. 3

Fig. 2

Fig. 1

1

Fig. 4